Europäisches Patentamt

(19) European Patent Office  (11) Publication number: **0 016 645**

Office européen des brevets  **B1**

(12) **EUROPEAN PATENT SPECIFICATION**

(45) Date of publication of patent specification: **22.12.82**  (51) Int. Cl.³: **B 23 K 33/00**

(21) Application number: **80300875.4**

(22) Date of filing: **20.03.80**

(54) Welded structures.

<table>
<tr><td>(30) Priority: <b>27.03.79 GB 7910579</b></td><td>(73) Proprietor: <b>IMPERIAL CHEMICAL INDUSTRIES PLC<br>Imperial Chemical House Millbank<br>London SW1P 3JF (GB)</b></td></tr>
<tr><td>(43) Date of publication of application:<br><b>01.10.80 Bulletin 80/20</b></td><td></td></tr>
<tr><td>(45) Publication of the grant of the patent:<br><b>22.12.82 Bulletin 82/51</b></td><td>(72) Inventor: <b>Fawcett, Richard<br>19 Turnberry Avenue<br>Eaglescliffe Stockton-on-Tees, Cleveland (GB)</b></td></tr>
<tr><td>(84) Designated Contracting States:<br><b>GB</b></td><td>(74) Representative: <b>Gratwick, Christopher et al,<br>Imperial Chemical Industries PLC Legal<br>Department: Patents Thames House North<br>Millbank<br>London SW1P 4QG (GB)</b></td></tr>
<tr><td>(56) References cited:<br><b>DD - A 99 816</b></td><td></td></tr>
</table>

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

Welded structures

This invention relates to welded structures and in particular to welded metal structures that are intended for use in a corrosive environment.

While it is clearly desirable to use metals that are resistant to corrosion, for economic or other reasons this is not always possible.

When a structure is designed, the thickness of the components is determined not only by the intended load bearing requirements and the strength of the metal employed, but also by the amount of corrosion anticipated during the life of the structure, so that, in spite of corrosion, the structure will still have adequate strength at the end of its design life.

In some structures it is necessary to weld together components of different metals. With some metal combinations, if the welded junction between the metals is exposed to a corrosive environment, accelerated corrosion at that exposed junction tends to occur producing what is known as knife-line corrosion down the interface between the two metals from the exposed junction.

With other metal combinations, particularly where the metals are similar to one another knife-line corrosion does not occur, or only occurs to an insignificant extent: thus knife-line corrosion is liable to occur at a stainless steel/carbon steel junction but may be insignificant at a junction between two different stainless steels or between two different carbon steels. In the present specification the term knife-line corrodible combination is utilised where the metals are ones between which a junction is liable to significant knife-line corrosion.

The extent of knife-line corrosion in a knife-line corrodible metal combination may be several times the normal anticipated corrosion at areas away from the junction between the metals. For example, in the case of a carbon steel/stainless steel junction, whereas the normal anticipated corrosion of the carbon steel component over the design life of the structure may extend to a depth of 2—3 mm from the component surface, the extent of knife-line corrosion occurring at the carbon steel/stainless steel interface over the same period may be 1—2 cm or more.

Clearly, unless measures are taken to counter the effect of such knife-line corrosion, the life of the structure will be greatly reduced. In some cases knife-line corrosion can be avoided by providing the surface of the structure with a protective coating: however such coatings require maintenance and in some applications may not be satisfactory for other reasons.

In the present invention these problems are reduced by arranging the weld configuration so that the length of the path along which knife-line corrosion takes place from the metal-metal junction exposed to the corrosive environment is increased.

This is achieved by providing one component with an appendage which is either integral with that component or is welded thereto and providing a layer of metal extending over, and being continuously welded to, the surface of that component, from the weld between the components, to at least part of the surface of the appendage.

The knife-line corrosion path thus becomes the interface between the layer of metal and the surface that that layer is welded to, namely the surface of the component between the appendage and the weld between the components and that part of the surface of the appendage covered by the layer.

It has been proposed GB—A—774967 to provide an overlay of the metal of a weld between ferritic and austenitic metals over the surface of the ferritic component to protect the weld from stresses resulting from thermal cycling. No appendage is present nor required to give this thermal cycling protection.

Considerations of strength are the main criteria in arriving at the design of a conventional weld, whether or not it is between the metals of a knife-line corrodible combination and the weld configuration that would conventionally be utilised to give the requisite strength is herein considered to be the load bearing region of the weld.

In the present invention, the length of the path of knife-line corrosion from the metal-metal junction exposed to the corrosive environment to this load bearing region of the weld is an excess of the extent of the anticipated knife-line corrosion occurring during the design life of the welded structure, and preferably has a length of at least 2 cm.

Thus in designing a welded structure in accordance with the invention, it is first necessary to determine the weld configuration necessary to give the requisite strength in the absence of knife-line corrosion. In this way the load bearing region of the weld is determined. It is then necessary to modify the design to compensate for knife-line corrosion.

In formulating the design of the welded structure, allowance is normally made for the effects of normal corrosion, generally by increasing the thickness of the components. Thus, where strength considerations dictate that the thickness of a given component is x units, and the expected rate of normal corrosion is y units per year, if the design life is n years, the component thickness is made in excess of $x + ny$ units.

The rate of knife-line corrosion between the two metals under consideration can be determined and this will indicate the expected extent of knife-line corrosion during the n years life of the welded structure, and hence determine the minimum extent by which the exposed junction between the metals is to be displaced from the load bearing region of the weld.

Welds between two dissimilar metals are often made employing a welding metal, e.g. from a welding rod, that is similar to one of the two dissimilar metals. In this case generally little or no knife-line corrosion will occur between the welding metal and the metal that is similar to the welding metal. The metal-metal junction that has to be protected from the knife-line corrosion is thus that one between the welding metal and the metal that is dissimilar thereto. However, in some cases, the junction between the welding metal and the metal similar thereto may also be subject to knife-line corrosion and so, in this case, that junction must also be protected so that the knife-line corrosion does not reach the load bearing region of the weld.

In the present invention, protection of the junction in the load bearing region of the weld between a knife-line corrodible combination of metals is effected by providing a layer of one of the metals, or of a metal which does not form a knife-line corrodible combination with that one of the metals, over, and continuously welded to, the other of said metals from the load bearing region of the weld for a distance at least equal to the anticipated extent of knife-line corrosion between said layer and said other of said metals.

This layer of metal may simply be an overlay of the weld metal or of another metal which does not form a knife-line corrodible combination with the weld metal.

The overlay may be an overlay over part of the surface of the one of the components to be welded together with the metal of which the overlay metal forms a knife-line corrodible combination: the overlay should extend for such a distance that the length of the welded junction between the overlay metal and the component, with which it forms a knife-line corrodible combination, from the point of exposure to the corrosive environment to the load bearing region of the weld is in an excess of the anticipated extent of knife-line corrosion. Thus during the design life of the structure knife-line corrosion can take place along the length of this welded junction between the component surface and the overlay metal but, because of the displacement of the point of exposure of the junction to the corrosive environment from the load bearing region of the weld, the knife-line corrosion will not reach the load bearing region of the weld during the design life of the structure.

The surface of the component on to which the overlay is formed includes at least part of the surface of an appendage integral with, or welded to, said component; where said appendage is not integral with said component it should be made from a metal that does not form a knife-line corrodible combination with the weld metal used to weld said appendage to said component and that weld metal in turn should not form a knife-line corrodible combination with the metal of said component.

In a preferred form of the invention the appendage comprises one metal layer of a bimetallic strip one face of which is welded to said component by means of weld metal that does not form a knife-line corrodible combination with the metal of that one layer or with the metal of said component. In this case the overlay metal is applied so that it covers all of the surface of the component between the load bearing region of the weld and the appendage and at least part of the other layer of the bimetallic strip, said other layer of the bimetallic strip being of a metal with which said overlay metal does not form a knife-line corrodible combination so that, in effect, said other layer of the bimetallic strip becomes part of the protection layer.

Various embodiments of the invention will now be described with reference to the accompanying drawings wherein

Figures 1 and 2 are cross sections through a conventional weld before and after corrosion,

Figures 3 and 4 are views similar to Figures 1 and 2 showing a preferred embodiment of the invention,

Figures 5 to 7 are views similar to Figure 1 showing alternative embodiments of the invention,

Figure 8 is a view similar to Figure 3 showing the application of the embodiment of Figure 3 in a prefabricated jointing member,

Figure 9 is a cross section similar to Figure 8 showing an application of the invention to welding together tubes of dissimilar metals.

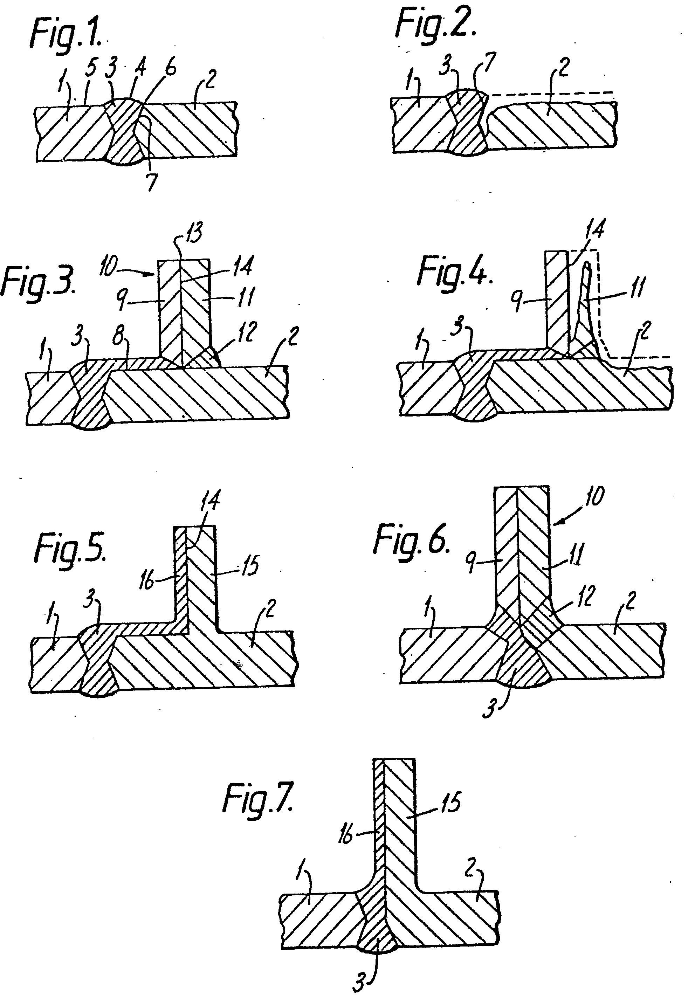

In Figure 1 there is shown a butt weld between two components 1, 2 composed of dissimilar metals e.g. stainless steel and carbon steel respectively. The components 1, 2 are welded together using a weld metal 3 of a type suitable for welding the dissimilar metals. The manufacturers of the metals from which the components are made normally recommend suitable welding metals. In these embodiments we assume that the welding metal 3 is the same as the metal of component 1 or is a metal that does not form a knife-line corrodible combination with the metal of component 1. Normal design considerations, eg.g. strength, require the weld to have the configuration shown, i.e. with the weld metal 3 filling the space between components 1, 2 with, perhaps, a slightly raised surface 4 in the vicinity of the weld.

In use, the upper surface 5 of the structure is exposed to a corrosive environment. After a period of time, the structure corrodes: it is here assumed for simplicity that the corrosion of component 1 and of the weld metal 3, is negligible compared with the corrosion of component 2. The corrosion takes two forms, firstly the normal corrosion of the surface 5 resulting in a reduction of thickness of component 2, and secondly, knife-line corrosion starting at the exposed junction 6 between the weld metal 3 and the metal of component 2.

A typical corroded structure is illustrated in Figure 2 where the original configuration is depicted by dotted lines. It is seen that, as the extent of knife-line corrosion occurring along the interface 7 between the two metals greatly exceeds that of the normal corrosion of the surface of component 2, the weld will fail at the junction of the dissimilar metals long before failure of the component 2 as a result of normal corrosion.

In the embodiment of the invention shown in Figure 3 however, the weld between the two components 1, 2 is of similar configuration, and has essentially the same load bearing region, as that of the weld in Figure 1. The weld confuguration differs however from that of Figure 1 in that the weld metal 3 is continued over the surface 8 of component 2 to contact and weld with one layer 9 of a bimetallic strip 10 coextensive with the length of the weld between components 1 and 2. Strip 10 is of welded laminate construction made, for example, by explosive welding; that layer 9 of the strip nearest the weld between components 1 and 2 is made of the same metal as component 1, or of the same metal as weld metal 3, or of a metal that does not form a knife-line corrodible combination with weld metal 3. The other layer 11 of the bimetallic strip 10 forms an appendage and is welded to component 2 by a weld 12 of the same metal as component 2 or of a metal that does not form a knife-layer corrodible combination with the metal of component 2. Layer 11 of the bimetallic strip 10 is formed from a metal, e.g. the same metal as component 2, that does not form a knife-line corrodible combination with the metal used for weld 12. The pathway between the metals that is liable to knife-line corrosion is exposed to the corrosive environment at 13 and so has a length corresponding to the width of strip 10 plus the lateral distance between the strip 10 and the junction between component 2 and the weld metal 3 in the space between components 1 and 2.

As is seen from Figure 4, knife-line corrosion occurs down the interface 14 between the layers of strip 10 and so is well removed from the load bearing region of the weld.

It will be appreciated that the strip 10 must be of such size, and displaced from the weld by such an extent that the knife-line corrosion will not reach the load bearing region of the weld between components 1 and 2 during the design life of the structure.

In Figure 5 a modification of the system of Figure 3 is shown: here, instead of utilising a bimetal strip 10, an integral flange 15 of component 2 is used as an appendage over one face of which is provided an overlay 16 of the weld metal 3.

As shown in Figures 3 to 5, it is preferred that the interface 14 between the metals at the appendage is laterally displaced from the line of the weld so that stress concentration produced by knife-line corrosion is displaced from the line of the weld.

However, in some cases, particularly where the weld is not stressed or only lightly stressed, it is not necessary to displace the interface from the line of the weld. Thus, as shown in Figure 6, a laminated strip 10 may be incorporated into, and extending out of, the weld between components 1 and 2, with the layer 11 of the strip forming the appendage and being welded to component 2 with a weld metal 12. The metal of layer 11 is one that does not form a knife-line corrodible combination with weld metal 12 and with the metal of component 2.

Alternatively, as shown in Figure 7, the appendage consists of a flange 15 integral with component 2 having an overlay 16 of the weld metal 3 on the side thereof nearer to component 1.

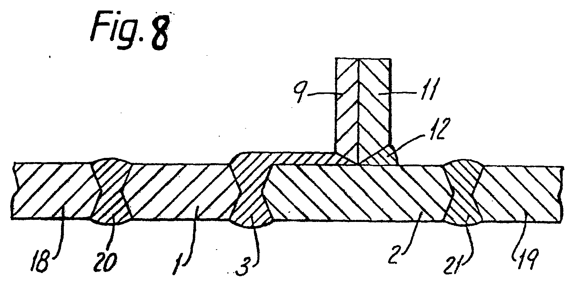

In some cases, particularly in chemical plant construction, it may be desirable to fabricate, as a separate unit, a jointing component in accordance with the present invention by welding components of dissimilar metals together with a knife-line corrosion displacing member appropriately positioned, and then to weld the appropriate sides of this jointing component to the components made from the dissimilar metals with conventional welds. Such an arrangement is shown in Figure 8 where two components 18, 19 made of dissimilar metals are connected by a jointing component fabricated in accordance with the configuration of Figure 3. Component 18 is welded to component 1 of the jointing component by weld metal 20 which does not form a knife-layer corrodible combination with either of the metals of components 1 and 18. Component 19 is welded to component 2 of the jointing components by weld metal 21. Again weld metal 21 is one that does not form a knife-line corrodible combination with either of the metals of components 2 and 19. This method of manufacture has the advantage that the special welds can be performed under more controlled conditions while only normal welds, between components 1 and 18, and between components 2 and 19, have to be performed on site.

In the foregoing description it is assumed that the structure is only exposed to a corrosive environment on one side thereof. It will be appreciated that where both surfaces are exposed to a corrosive environment, it is desirable that the exposed metal-metal junctions are displaced from the load bearing region of the weld on both exposed surfaces. Furthermore, in the foregoing description it is assumed that the corrosive environment has little or no effect on one of the metals employed: where both metals are liable to corrosion, the same principles of displacement of the exposed metal-metal junction apply. It is also apparent that the thicknesses of the metal layer or layers used to displace the exposed junction should be such that normal corrosion does not remove this layer or layers at any point to such an extent that the layer or layers are eroded down to the interface between the metals before the knife-line corrosion has reached that point.

In the foregoing description, butt welds have been described: it will however be apparent that the invention can be applied to other weld forms.

The invention is of use wherever knife-line corrosion is liable to take place at a welded joint between dissimilar metals. It is of particular interest when welding stainless steel to carbon steel (in which case the weld metal is usually a stainless steel) but can also be used to advantage between other metal combinations, e.g. when welding carbon steel to nickel or to high nickel alloys.

The invention is of particular merit in the construction of chemical plant, particularly for items that cannot be satisfactorily protected from corrosion by methods such as the application of a protective coating. Such instances arise where it is desired to use a sealed vessel and so maintenance operations on the interior is expensive and gives rise to loss of production. The invention is of particular utility in the construction of fermentation apparatus where the vessel is liable to corrosive attack by the fermentation medium which is often an aerated aqueous solution of inorganic salts. The use of welded joints for joining dissimilar metals, such as those forming knife-line corrodible combinations, instead of sealing systems where exposed contacting metal/metal joints are avoided, is desirable in such structures for ease of maintaining sterility.

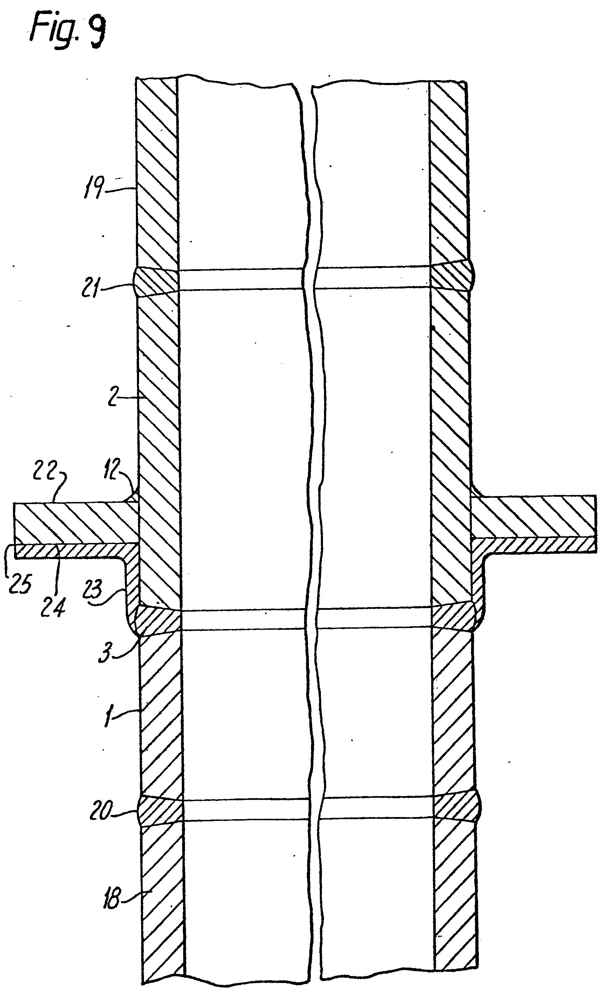

A further example of the invention is illustrated in Figure 9 (which is not to scale). A ring 22 of 36 cm outside diameter and 10 mm thickness was welded to a short length of a pipe 2 of wall thickness 10 mm and nominal outside diameter 30 cm by a weld 12 so that 15 mm of the pipe 2 projected through ring 22. Ring 22, pipe 2, and weld 12 were all made of carbon steel type ASTM A106 B. A short length of a stainless steel (Sandvik 3 RE 60) pipe 1 of similar dimensions to pipe 2 was welded to the end of pipe 2 projecting through ring 22 using a weld metal 3 (Inconel 182) recommended for welding the stainless steel Sandvik 3 RE 60 to carbon steel. No knife-line corrosion is liable to occur between the Sandvik 3 RE 60 and the Inconel 182 weld metal. After welding pipe 1 to pipe 2, a 3 mm thick layer 23 of stainless steel type 316 was applied by welding over weld metal 3, over the projecting portion of pipe 2 and over the face 24 of ring 22 nearer the projecting end of pipe 2. No knife-line corrosion is liable to occur between the Inconel 182 weld metal 3 and the stainless steel type 316.

The resultant jointing section of pipe was then used to connect a pipe 19 to a stainless steel (Sandvik 3 RE 60) pipe 18 of similar dimensions to pipes 1 and 2. Pipe 2 was welded to pipe 19 by weld 21, and pipe 19 were of carbon steel type ASTM A 106 B. Pipe 1 was welded to pipe 18 using a weld 20 of stainless steel (AVESTA 3 RE 60 PW) recommended for welding together Sandvik Stainless steel 3 RE 60. No knife-line corrosion is liable to occur between AVESTA 3 RE 60 PW and Sandvik 3 RE 60.

The welded structure was designed to have a service life of 15 years of exposure of the exterior surface of the pipes to an aerated aqueous mineral salt containing fermentation medium at 35°C. During the design life, the expected corrosion of pipe 19 and pipe 2 is a reduction in wall thickness of about 3 mm. At the same time, knife-line corrosion to the extent of about 30 mm between the stainless steel type 316 and the carbon steel is expected. As the knife-line corrosion pathway from the metal/metal junction 25 exposed to the corrosive environment at the rim of ring 22 to the load bearing region of weld 3 has a length of about 45 mm, it is seen that the knife-line corrosion will not reach weld 3 during the intended service life of the structure.

**Claims**

1. A welded structure for use in a corrosive environment including a weld (3) between components (1, 2) formed from metals of a knife-line corrodible combination.

characterised in that, in order to avoid weakening of the load bearing region of the weld (3) as a result of knife-line corrosion between said metals,

one (2) of said components is provided with

an integral appendage (15), or

an appendage (11) welded to said one component (2) with a weld metal (12) that forms a knife-line corrodible combination neither with the metal of said appendage (11) nor with the metal of the component (2) to which the appendage (11) is welded, and

a layer of metal is provided covering, and being continuously fused to

the surface (8) of said one component (2) between the appendage (11; 15) and

the weld (3) between said components (1, 2), and

at least part of the surface of the appendage (11; 15), the metal of said layer forming a knife-line corrodible combination with

the metal of said one component (2), and

the metal of the appendage (11; 15),

so that the path liable to knife-line corrosion

from the corrosive environment

to that metal-metal interface (7), in the load bearing region of the weld (3) between said components (1, 2), that is liable to knife-line corrosion,

is the continuously welded interface (14) between said layer and the underlying surfaces of the appendage (11; 15) and the component (2), and

the end of said path that is exposed to the corrosive environment is the junction (13) between said layer and said appendage (11; 15) at the end of said layer,

said appendage (11; 15) being so positioned and/or of such size that said path has a length at least equal to the anticipated extent of knife-line corrosion along the path during the design life of the structure.

2. A structure according to claim 1 characterised in that

the appendage comprises one metal layer (11) of a bimetallic strip (10) welded to said one component (2),

said one layer (11) being welded to the component (2) by means of a weld metal (12) that forms a knife-line corrodible combination with neither the metal of that one layer (11) nor with the metal of said one component (2),

while the metal of the other layer (9) of the bimetallic strip (10) forms part or the layer of metal extending from the appendage (11) to the weld (3) between said components (1, 2).

3. A structure according to claim 1 or claim 2 characterised in that the metal used to form the weld (3) between the components (1, 2) is one that does not form a knife-line corrodible combination with one (1) of the components.

4. A structure according to any one of claims 1 to 3 characterised in that one component (1) is made from stainless steel and the other component (2) is made from carbon steel.

5. A structure according to any one of claims 1 to 4 characterised in that the length of the path liable to knife-line corrosion is at least 2 cm.

6. A welded structure including

a first member (18) formed from a first metal, and

a second member (19) formed from a second metal, characterised in that

said first (18) and second (19) members are connected together by a welded jointing structure according to any one of claims 1 to 5, said jointing structure comprising

a first component (1), formed from said first metal, welded to

a second component (2), formed from said second metal,

said first member (18) being welded to said first component (1) by means of a weld metal (20) that does not form a knife-line corrodible combination with said first metal, and

said second member (19) being welded to said second component (2) by means of a weld metal (21) that does not form a knife-line corrodible combination with said second metal.

**Revendications**

1. Structure soudée utilisable dans un milieu corrosif, comprenant une soudure (3) réalisée entre des éléments (1, 2) constitués par des métaux formant une combinaison pouvant subir une corrosion en tranchant de couteau (au droit de l'interface depuis la jonction exposée), caractérisée en ce que, afin d'éviter l'affaiblissement de la zone de support des charges de la soudure (3) du fait de la corrosion en tranchant de couteau entre ces métaux, l'un de ces éléments (2) est muni d'un appendice (15) qui en est solidaire ou d'un appendice (11) soudé sur cet élément (2) à l'aide d'un métal pour soudure (12) qui ne forme une combinaison pouvant subir une corrosion en tranchant de couteau ni avec le métal de cet appendice (11), ni avec le métal de l'élément (2) sur lequel l'appendice (11) est soudé, et en ce qu'une couche de métal est prévue, qui recouvre et qui est réunie de façon continue à la surface (8) de cet élément (2) entre l'appendice (11; 15) et la soudure (3) prévue entre ces éléments (1, 2) et à au moins une partie de la surface de l'appendice (11; 15), le métal de cette couche formant une combinaison pouvant subir une corrosion en tranchant de couteau avec le métal de cet élément (2) et la métal de l'appendice (11; 15), de sorte que le trajet pouvant permetre une corrosion en tranchant de couteau depuis le milieu corrosif jusqu'à l'interface métal-métal (7), dans la zone de support des charges de la soudure (3) entre ces éléments (1, 2), qui est susceptible de subir une corrosion en tranchant de couteau, est l'interface (14) soudée de façon continue entre cette couche et les surfaces sous-jacentes de l'appendice (11; 15) et de l'élément (2), et l'extrémité de ce trajet que est exposée au milieu corrosif est la jonction (13) entre cette couche et cet appendice (11; 15) à l'extrémité de ladite couche, ledit appendice (11; 15) étant disposé et/ou ayant une dimension telle que ce trajet ait une longueur au moins égale à l'étendue présumée de la corrosion en tranchant de couteau le long dudit trajet pendant la longévité nominale de la structure.

2. Structure suivant la revendication 1, caractérisée en ce que l'appendice comprend une couche de métal (11) constituée par une bande bimétal (10) soudée sur cet élément (2), cette couche (11) étant soudée sur l'élément (2) à l'aide d'un métal pour soudure (12) qui ne forme une combinaison pouvant subir une corrosion en tranchant de couteau ni avec le métal de cette couche (11), ni avec le métal de cet élément (2), tandis que le métal de l'autre couche (9) de la bande bimétal (10) fait partie de la couche de métal s'étendant depuis l'appendice (11) jusqu'à la soudure (3) prévue entre les éléments (1, 2).

3. Structure suivant la revendication 1 ou 2, caractérisée en ce que le métal utilisé pour former la soudure (3) entre les éléments (1, 2) est un métal qui ne forme pas une combinaison pouvant subir une corrosion en tranchant de couteau avec l'un (1) des éléments.

4. Structure suivant l'une quelconque des revendications 1 à 3, caractérisée en ce que cet élément (1) est en acier inoxydable et en ce que l'autre élément (2) est en acier au carbone.

5. Structure suivant l'une quelconque des revendications 1 à 4, caractérisée en ce que la longueur du trajet susceptible de subir une corrosion en tranchant de couteau est d'au moins 2 cm.

6. Structure soudée comprenant une première partie (18) constituée par un premier métal et une seconde partie constituée par un second élément, caractérisée en ce que cette première (18) et cette seconde (19) parties sont réunies ensemble par une structure de jonction soudée suivant l'une quelconque des revendications 1 à 5, cette structure de jonction comprenant un premier élément (1) formé par ce premier métal, soudé sur un second élément (2) formé par ce second métal, la première partie (18) étant soudée sur ce premier élément (1) au moyen d'un métal pour soudure (20) qui ne forme pas une combinaison pouvant subir une corrosion en tranchant de couteau avec ce premier métal, et cette seconde partie (19) étant soudée sur ce second élément (2) au moyen d'un métal pour soudure (21) qui ne forme pas une combinaison pouvant subir une corrosion en tranchant de couteau avec ce second métal.

**Patentansprüche**

1. Schweißkonstruktion für die Anwendung in einer korrodierenden Umgebung mit einer Schweißnaht (3) zwischen Teilen bzw. Werkstücken (1, 2), die aus Metallen in einer in Form von Messerschnitt- bzw. Messerlinien-korrosion korrodierbaren Kombination gebildet sind,

dadurch gekennzeichnet, daß zur Vermeidung einer von einer Messerschnittkorrosion zwischen den erwähnten Metallen herrührenden Schwächung des tragenden bzw. belasteten Bereichs der Schweißnaht (3)

eines (2) der Teile

einen Ansatz (15), der mit dem Teil (2) ein Stück bildet, aufweist oder

einen Ansatz (11) aufweist, der an dem einen Teil (2) mit einem Schweißmetall (12) angeschweißt ist, wobei das Schweißmetall (12) weder mit dem Metall des Ansatzes (11) noch mit dem Metall des Teils (2), an dem der Ansatz (11) angeschweißt ist, eine in Form von Messerschnittkorrosion korrodierbare Kombination bildet, und

eine Metallschicht vorgesehen ist, die

die Oberfläche (8) des einen Teils (2) zwischen dem Ansatz (11; 15) und der Schweißnaht (3) zwischen den Teilen (1, 2) und mindestens einen Teil der Oberfläche des Ansatzes (11; 15)

bedeckt und mit den Oberflächen, die sie bedeckt, zusammenhängend bzw. ohne Unterbrechung verschweißt ist, wobei das Metall der Metallschicht mit

dem Metall des einen Teils (2) und

dem Metall des Ansatzes (11; 15)

eine in Form von Messerschnittkorrosion korrodierbare Kombination bildet, so daß es sich

bei dem der Messerschnittkorrosion ausgesetzten Weg

von der korrodierenden Umgebung

zu derjenigen Metal-Metal-Grenzfläche (7) in dem tragenden Bereich der Schweißnaht (3) zwischen den Teilen (1, 2), die der Messerschnittkorrosion ausgesetzt ist,

um die durch zusammenhängendes Verschweißen gebildete Grenzfläche (14) zwischen der Metallschicht und den darunterliegenden Oberflächen des Ansatzes (11; 15) und des Teils (2) und

bei dem der korrodierenden Umgebung ausgesetzten Ende des erwähnten Weges um die Verbindung (13) zwischen der Metallschicht und dem Ansatz (11; 15) am Ende der Metallschicht

handelt,

wobei der Ansatz (11; 15) so angeordnet bzw. eingeortet ist und/oder eine solche Größe hat, daß die Länge des erwähnten Weges mindestens gleich der voraussichtlichen Ausdehnung der Messerschnittkorrosion entlang des Weges während der Soll-Lebensdauer der Schweißkonstruktion ist.

2. Schweißkonstruktion nach Anspruch 1, dadurch gekennzeichnet, daß

der Ansatz aus einer Metallschicht (11) eines en dem einen Teil (2) angeschweißten Bimetallstreifens (10) besteht,

wobei die eine Schicht (11) mit einem Schweißmetall (12), das weder mit dem Metall der einen Schicht (11) noch mit dem Metall des einen Teiles (2) eine in Form von Messerschnittkorrosion korrodierbare Kombination bildet, an dem Teil (2) angeschweißt ist,

während das Metall der anderen Schicht (9) des Bimetallstreifens (10) einen Teil der Metallschicht bildet, die sich von dem Ansatz (11) bis zu der Schweißnaht (3) zwischen den Teilen (1, 2) erstreckt.

3. Schweißkonstruktion nach Anspruch 1 oder 2, dadurch gekennzeichnet, daß das zur Bildung der Schweißnaht (3) zwischen den Teilen (1, 2) eingesetzte Metall ein Metall ist, das mit einem (1) der Teile keine in Form von Messerschnittkorrosion korrodierbare Kombination bildet.

4. Schweißkonstruktion nach einem der Ansprüche 1 bis 3, dadurch gekennzeichnet, daß das eine Teil (1) aus rostfreiem Stahl und das andere Teil (2) aus Kohlenstoffstahl bzw. unlegiertem Stahl hergestellt ist.

5. Schweißkonstruktion nach einem der Ansprüche 1 bis 4, dadurch gekennzeichnet, daß die Länge des der Messerschnittkorrosion ausgesetzten Weges mindestens 2 cm beträgt.

6. Schweißkonstruktion mit

einem aus einem ersten Metall gebildeten, ersten Bauglied (18) und

einem aus einem zweiten Metall gebildeten, zweiten Bauglied (19),

dadurch gekennzeichnet, daß

das erste (18) und das zweite (19) Bauglied durch eine Schweißverbindungskonstruktion nach einem der Ansprüche 1 bis 5 miteinander verbunden sind, wobei die Verbindungskonstruktion

ein aus dem ersten Metall begildetes, erstes Teil (1) das an

einem aus dem zweiten Metall gebildeten, zweiten Teil (2) angeschweißt ist,

aufweist,

wobei das erste Bauglied (18) mit einem Schweißmetall (20), das mit dem ersten Metall keine in Form von Messerschnittkorrosion korrodierbare Kombination bildet, an dem ersten Teil (1) angeschweißt ist, und

das zweite Bauglied (19) mit einem Schweißmetall (21), das mit dem zweiten Metall keine in Form von Messerschnittkorrosion korrodierbare Kombination bildet, an dem zweiten Teil (2) angeschweißt ist.

**Fig.1.**

**Fig.2.**

**Fig.3.**

**Fig.4.**

**Fig.5.**

**Fig.6.**

**Fig.7.**

*Fig. 8*

Fig. 9